(19) Europäisches Patentamt
European Patent Office
Office européen des brevets

(11)  **EP 3 019 760 B1**

(12)  **EUROPÄISCHE PATENTSCHRIFT**

(45) Veröffentlichungstag und Bekanntmachung des Hinweises auf die Patenterteilung:
**08.08.2018  Patentblatt 2018/32**

(21) Anmeldenummer: **14736598.5**

(22) Anmeldetag: **10.06.2014**

(51) Int Cl.:
***F16C 33/58*** *(2006.01)*

(86) Internationale Anmeldenummer:
**PCT/DE2014/200253**

(87) Internationale Veröffentlichungsnummer:
**WO 2015/003696 (15.01.2015 Gazette 2015/02)**

(54) **STÜTZLAGERUNG, INSBESONDERE LAUFROLLE**

SUPPORT BEARING, IN PARTICULAR RUNNING ROLLER

PALIER D'APPUI, EN PARTICULIER GALET DE ROULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **08.07.2013  DE 102013213332**

(43) Veröffentlichungstag der Anmeldung:
**18.05.2016  Patentblatt 2016/20**

(73) Patentinhaber: **Schaeffler Technologies AG & Co. KG**
**91074 Herzogenaurach (DE)**

(72) Erfinder:
• **STÖCKER, Manfred**
**97493 Bergrheinfeld (DE)**
• **SMOLENSKI, Witold Marek**
**97456 Dittelbrunn OT Hambach (DE)**
• **DRABEK, Hans-Joachim**
**40822 Mettmann (DE)**

(56) Entgegenhaltungen:
**DE-A1-102010 036 248      JP-A- 2002 143 928**
**US-B2- 6 616 338**

## Beschreibung

Die Erfindung betrifft eine Stützlagerung gemäß dem Oberbegriff des Anspruchs 1, zum Beispiel für Richtmaschinen, insbesondere mit einem Außenring, mit einem Innenring und zwischen dem Außenring und dem Innenring auf Laufbahnen abrollbaren Wälzkörpern, wobei durch eine Last mit fester Wirkrichtung ein Biegemoment zwischen den Ringen anliegt.

## Gebiet der Erfindung

Bei der Stützlagerung (auch Trag-Stütz-Lagerung genannt) wird die axiale Ausrichtung der Welle je nach Richtung der eingeleiteten Kraft von einem oder mehreren Lagern übernommen. Zu den Stützlagerungen zählen Laufrollen, insbesondere Stützrollen, Kurvenrollen oder Kugellager-Laufrollen. Stützrollen sind einbaufertige Nadel- oder Zylinderrollenlager mit besonders dickwandigem Außenring, die unter anderem in Vielwalzen-Kraftwalzgerüsten, Richtmaschinen, Kurvengetrieben, Führungsbahnen, Förderanlagen und Linearführungssystemen eingesetzt werden (z.B. DE 10 2010 036 248 A1).

Kurvenrollen sind Stützrollen mit einer Axialführung, wobei anstelle des Innenrings ein massiver Rollenzapfen vorgesehen ist. Der Rollenzapfen weist ein Befestigungsgewinde und in vielen Fällen auf beiden Seiten einen Innensechskant auf. Laufrollen hingegen gleichen in ihrem Aufbau Rillen- oder Schrägkugellagern, haben jedoch dickwandige Außenringe mit einer gerundeten Mantelfläche.

Stützrollen sind vorgesehen, hohe radiale Belastungen, aber auch axiale Belastungen aus beiden axialen Richtungen aufzunehmen. Daher werden als Wälzkörper oft Nadelrollen oder Zylinderrollen eingesetzt.

Ferner ist problematisch, dass gerade der Bereich des Wälzkontaktes aufgrund von Kantentragen bei Biegemomenten besonders in Mitleidenschaft gezogen werden kann und die Lebensdauer des Stützlagers ebenfalls erheblich leidet. Ferner können enorme Ungleichbelastungen zwischen äußeren und inneren Wälzlagerreihen bestehen. Die Wälzkörper erfahren so ein sehr ungleichmäßiges Tragverhalten, wobei die geringsten Kontaktdrücke zwischen Wälzkörper und Achse in der Mitte des Stützlagers und die höchsten Drücke am Rand des Stützlagers auftreten.

Die JP2002-143928 A offenbart eine Stützrolle mit mehreren Reihen von Wälzkörpern, wobei eine Lastverteilung auf die Wälzkörperreihen mittels einer axial variierenden Profilierung des Innenrings erreicht wird. Die US 6,616,338 B2 offenbart ein Lager mit einem Innenring, dessen Laufbahn für Wälzkörper Abflachungen im Bereich der Lastzone aufweist, um die Lastverteilung auf die Wälzkörper zu optimieren.

## Aufgabe der Erfindung

Der Erfindung liegt die Aufgabe zu Grunde, die Effekte eines Biegemoments, wie zum Beispiel einer Bolzenbiegung, zumindest zu verringern, ohne andere Eigenschaften der Stützlagerung zu verschlechtern.

## Beschreibung der Erfindung

Diese Aufgabe wird bei einer Stützlagerung der eingangs genannten Art, die eine Außenlaufbahn des Innenrings und/oder eine Innenlaufbahn des Außenrings eine Profilierung mit in axialer Richtung veränderlichem Durchmesser aufweist, wobei die Profilierung an eine durch das Biegemoment verursachte Biegelinie im Wälzkontakt angeglichen oder angenähert ist und die Biegelinie eine Linie ist, auf der vom jeweiligen Ring auf die Wälzkörper übertragenen und durch das Biegemoment verursachten Biegekräfte im Wesentlichen senkrecht stehen dadurch gelöst, dass die Profilierung der Außenlaufbahn des Innenrings zumindest in einem Bereich durch eine radiale Korrekturfunktion w(x) definiert ist und der Durchmesser D(x) des Innenrings von w(x) und einem konstanten Durchmesser Do in der folgenden Weise abhängt:

$$D(x) = D_0 - 2 \cdot w(x);$$

$$w(x) = R_{K2} - (R_{K2}^2 - x^2)^{-0{,}5}$$

Dabei ist x eine axiale Position am Innenring. Ein zweiter Krümmungsradius ($R_{K2}$) ist in Abhängigkeit von Richtung und/oder Betrag des Biegemomentes und, insbesondere auch der Stützlagereigenschaften, gewählt.

Auf diese Weise können die Biegekräfte weitgehend gleichmäßig über den Wälzkontakt verteilt werden, wobei unter Wälzkontakt die Fläche gemeint ist, auf der sich Wälzkörper und Laufbahn insbesondere unter Berücksichtigung der Elastizität des Wälzkörpers berühren.

Unter axialer Richtung wird eine Richtung verstanden, die parallel zur Drehachse der Stützlagerung verläuft. Dabei kann der Innenring in eine massive Achse, in einen massiven Bolzen oder in einen massiven Achszapfen integriert sein, wobei an der massiven Achse, beziehungsweise am massiven Bolzen, beziehungsweise am massiven Achszapfen, die Profilierung der Außenlaufbahn ausgebildet ist. Massiv bedeutet in diesem Zusammenhang, dass der Innenring in ein Bauteil integriert ist, welches im Wesentlichen keine Hohlräume aufweist, wenn man von einer Schmiermittelversorgung oder von Schmiermittelbohrungen oder dergleichen absieht.

Bei einer vorteilhaften Ausführungsform ist der Innenring auf eine Achse, einen Bolzen oder einen Achszapfen aufbringbar oder aufpressbar und ist gegen eine Verdrehung gegenüber der Achse, dem Bolzen oder dem Achszapfen gesichert. Dies kann sowohl bei einem drehenden als auch bei einem feststehenden Innenring der Fall sein.

Die Profilierung der Außenlaufbahn des Innenrings ist erfindungsgemäß durch eine radiale Korrekturfunktion $w(x)$ definiert, wobei der lokale Durchmesser $D(x)$ des Innenrings von $w(x)$ und einem konstanten Durchmesser $D_0$ in der folgenden Weise abhängt:

$$D(x) = D_0 - 2*w(x);$$

$$w(x) = R_{K2} - (R_{K2}^2 - x^2)^{-0,5}$$

wobei $x$ eine axiale Position am Innenring ist, und der zweite Krümmungsradius $R_{K2}$ in Abhängigkeit von Richtung und/oder Betrag des Biegemomentes und insbesondere auch der Stützlagereigenschaften, gewählt ist. Der zweite Krümmungsradius $R_{K2}$ kann durch Schätzung, Lagerverschleißanalysen oder durch eine Computersimulation der Stützlagerung, beziehungsweise dessen Wälzverhaltens, ermittelt werden. Der zweite Krümmungsradius $R_{K2}$ beträgt beispielsweise zwischen 5000 bis 30000 Millimetern. Dabei muss die Biegelinie nicht genau nachgebildet werden, sondern eine Annäherung an die Biegelinie kann bereits zu einer Lebensdauerverlängerung führen, die für den üblichen Gebrauch ausreicht. Dabei kann die Profilierung auch zylindrische und gerundete Bereiche aufweisen, weil diese sich gegebenenfalls der Stützlagergeometrie oder den Wälzkörpern anpassen muss.

Vorteilhafterweise ist der Innenring oder der Außenring mittelbar oder unmittelbar mit einem Lagerblock fest verbunden. Der Lagerblock hat die Funktion eines Sockels oder einer Verankerung, um die Last, die über das Stützlager geleitet wird, aufzufangen.

Wenn die Wälzkörper in zwei, drei oder vier Wälzkörperreihen angeordnet sind, kann insgesamt eine größere Wälzkontaktfläche erzielt werden, womit die Stützlagerung mehr Last tragen kann. Hierbei kann die Biegelinie für die jeweilige Wälzkörperreihe einen anderen Verlauf aufweisen, weil normalerweise die außen liegenden Wälzkörperreihen anders gerichtete Biegekräfte aufnehmen müssen, als innen liegende Wälzkörperreihen. Daher kann es von Vorteil sein, innere Wälzkörperreihen auf zylindrischen Bereichen und äußere Wälzkörperreihen auf gerundeten der Profilierung vorzusehen, um die Last auf die Wälzkörperreihen gleichmäßig zu verteilen.

Bei einer vorteilhaften Ausführungsform ist jeder Wälzkörperreihe ein zylindrischer oder ein gerundeter Bereich der Profilierung zugeordnet.

Bei einem feststehenden Innen- oder Außenring ist es vorteilhaft, wenn dieser Zuführungs- oder Einleitungsöffnungen für ein Schmiermittel, insbesondere Schmieröl oder Schmierfett, aufweist.

Bei einer vorteilhaften Ausführungsform weist eine Außenlaufbahn des Innenrings oder eine Innenlaufbahn des Außenrings im Bereich einer Lastzone in Umfangsrichtung eine geringere Krümmung (Abflachung) auf als die jeweilige Laufbahn außerhalb der Lastzone. Unter Lastzone wird hierbei ein Bereich zwischen Außenlaufbahn und Innenlaufbahn verstanden, durch den die Wälzkörper hindurchrollen können und dabei in höherem Maße Stützlast zwischen den Laufbahnen übertragen. Diese Lastzone richtet sich nach der Richtung der Stützlast aus. Unter Umfangsrichtung wird eine Wälzrichtung verstanden, in die die Wälzkörper abrollen können, oder deren Gegenrichtung.

Bei einer vorteilhaften Ausführungsform übertragen mindestens drei, vier oder fünf Wälzkörper einer Wälzkörperreihe gleichzeitig einen erhöhten Anteil der Stützkraft zwischen Außenring und Innenring. Dank einer erfindungsgemäßen Profilierung können aufgrund des minimierten oder eliminierten Kantentragens mehr Wälzkörper, insbesondere bei einer Vielzahl von Wälzkörperreihen, gleichzeitig eine tragende Funktion übernehmen. Die Stützlagerung leidet nicht unter der durch das Biegemoment eingebrachten Verformung.

Vorteilhafterweise weist der Innenring, welcher an seiner jeweiligen Laufbahn im Bereich der Lastzone in Umfangsrichtung die geringere Krümmung auf als die jeweilige Laufbahn außerhalb der Lastzone. Dazu muss der Innenring ein in Bezug auf die Stützlast feststehender Ring sein. Denn die geringere Krümmung muss in der Lastzone während des Wälzlagerbetriebes verbleiben, also in Bezug auf die Lastrichtung ausgerichtet, insbesondere zur Last hin oder von der Last weg orientiert, sein.

Von daher ist es vorteilhaft an der Stützlagerung außen eine Hilfsvorrichtung (zum Beispiel eine Markierung) anzubringen, an der zu erkennen ist, wie das Stützlager beim Einbau, beispielsweise eine Stützrolle, orientiert werden soll. Idealerweise kann diese Hilfsvorrichtung bei optimaler Position eine Fluchtung hervorrufen oder über eine Nut korrekt ausrichtbar sein. Diese Hilfsvorrichtung ist nur für einen feststehenden Innenring mit unterschiedlicher Krümmung in Umfangsrichtung erforderlich.

Bei einer Stützlagerung, wie zum Beispiel einer Laufrolle, kann in einem vorinstallierten Zustand (ohne Last) in der Lastzone der Stützlagerung eine geringere Vorspannung der Wälzkörper entstehen, da die geringere Krümmung an der Außenlaufbahn des Innenrings ausgebildet ist und eine Materialrücknahme am Innenring vorliegt. Wichtig ist, dass die Anordnung der Lastzone der Stützlagerung durch die Anbringung der Krümmung am Innenring für die Stützlagerung vorgegeben ist.

Bei einer vorteilhaften Ausführungsform ist die Krümmung in Umfangsrichtung durch einen ersten Krümmungsradius $R_{K1}$ vorgegeben, wobei der erste Krümmungsradius $R_{K1}$ durch eine Summe aus der Radiusvergrößerung $\Delta r$ und dem Radius R der jeweiligen Laufbahn definiert ist:

$$R_{K1} = R + \Delta r;$$

$$E = \Delta r + F,$$

wobei die Exzentrizität E der jeweiligen Laufbahn aus einer Summe aus der Radiusvergrößerung $\Delta r$ und einer maximalen Materialrücknahme F gebildet ist, die für die Ausbildung einer geringeren Krümmung erforderlich ist. Mit anderen Worten, der radiale Abstand der Außenlaufbahn zur Drehachse ist im Bereich der Krümmung kleiner als an der übrigen Außenlaufbahn. Je größer die Radiusänderung $\Delta r$ gewählt wird, desto größer muss die maximale Materialrücknahme F sein. Die Radiusvergrößerung $\Delta r$ und die Materialrücknahme F sollen einer optimalen Lastverteilung in Umfangsrichtung angepasst werden: zum Beispiel werden bei zu starker Abflachung seitliche Wälzkörper höhere Belastungen aufnehmen als mittlere Wälzkörper.

Beste Ergebnisse erzielt eine Krümmung in Umfangsrichtung - nachfolgend auch vereinfachend Abflachung genannt - deren geringere Krümmung in Umfangsrichtung durch einen ersten Krümmungsradius $R_{k1}$ definiert ist, der um 0,2% bis 0,8 % des Laufbahndurchmessers D größer ist als der Laufbahnradius R, also zwischen $R_{K1}$ = 0,002 * D + R bis $R_{K1}$ = 0,008 * D + R liegt.

Die maximale Materialrücknahme F sollte für beste Ergebnisse zwischen 0,1% bis 0,6% des Laufbahndurchmessers D liegen, also zwischen F = 0,001 * D und F = 0,006 * D.

Vorteilhafterweise weist der Innen- oder Außenring im Bereich der Lastzone in Umfangsrichtung eine geringere Krümmung auf als außerhalb der Lastzone, wobei der jeweilige Ring mittels einer Verdrehsicherung in Bezug zur Stützkraft fixierbar ist. Diese Verdrehsicherung kann auf verschiedene Weisen implementiert werden, wobei diese teilweise oder ganz durch eine zusätzliche Abflachung oder eine Nut realisiert ist. Auf diese Weise ist sichergestellt, dass die Krümmung nur dann lastverteilend wirkt, wenn die Wälzkörper auch Last tragen sollen.

Bei einer vorteilhaften Ausführungsform weist die Innen- oder Außenlaufbahn, eine Profilierung mit in axialer Breite veränderlichem Außendurchmesser auf, wobei die Profilierung an eine durch das Biegemoment verursachte Biegelinie im Wälzkontakt angeglichen oder angenähert ist und die Biegelinie durch eine Linie definiert ist, auf der vom Innenring auf die Wälzkörper übertragenen und durch das Biegemoment verursachten Biegekräfte im Wesentlichen senkrecht stehen. Auf diese Weise können die Biegekräfte weitgehend gleichmäßig über den Wälzkontakt verteilt werden, wobei unter Wälzkontakt die Fläche verstanden wird, auf der sich Wälzkörper und Laufbahn insbesondere unter Berücksichtigung der Elastizität des Wälzkörpers berühren.

Beachtlich ist, dass die erfindungsgemäße Profilierung im Gegensatz zur Krümmung in axialer Richtung variiert und unabhängig von einer Krümmung in Umfangsrichtung ausgelegt werden kann. Die Krümmung in Umfangsrichtung kann durchaus variieren, beispielsweise mehr als zwei Krümmungen aufweisen. Damit lassen sich Krümmungen in Umfangsrichtung und auch in axialer Richtung hervorragend kombinieren. Zum einen kann die Profilierung auch am drehenden Innen- oder Außenring angebracht werden, insbesondere auch an einem stehenden Innenring, bei dem die Außenlaufbahn im Bereich der Lastzone in Umfangsrichtung eine geringere Krümmung aufweist als außerhalb der Lastzone. Somit können sich Profilierung und Krümmung ohne weiteres überlagern.

Vorteilhafterweise sind die Wälzkörper Nadelrollen, Zylinderrollen oder Kegelrollen, logarithmisch profilierte Nadelrollen, logarithmisch profilierte Zylinderrollen oder logarithmisch profilierte Kegelrollen. Die Form der Wälzkörper muss nicht verändert werden, womit die Bauteilvielfalt gering gehalten werden kann. Die Wälzkörper können in einem festgelegten Standard, auch für andere Lager hergestellt werden. Die Berücksichtigung des Biegemoments zwischen Außen- und Innenring wird über die Annäherung oder Angleichung der Profilierung der Außenlaufbahn des Innenrings an die dort durch das Biegemoment verursachte Biegelinie realisiert. Auch die Richtung der Stützlast muss bei der Wälzkörperwahl nicht berücksichtigt werden.

Mögliche Ausführungsformen der erfindungsgemäßen Stützlagerung sind als Laufrollen, insbesondere Stützrollen oder Kurvenrollen ausführbar.

Weitere vorteilhafte Ausbildungen und bevorzugte Weiterbildungen der Erfindung sind der Figurenbeschreibung und/oder den Unteransprüchen zu entnehmen.

**Kurze Beschreibung der Zeichnungen**

Im Folgenden wird die Erfindung anhand der in den Figuren dargestellten Ausführungsbeispiele näher beschrieben und erläutert. Dabei zeigen:

Figur 1    eine dreireihige Stützrolle mit Zylinderrollen im Längsschnitt, entlang der Drehachse als erstes Ausführungsbeispiel,

Figur 2A    eine schematische Veranschaulichung einer gleichmäßig verteilten Stützkraft,

Figur 2B    eine schematische Veranschaulichung einer Biegelinie bei vorliegendem Biegemoment,

Figur 3    eine geschnittene Ansicht eines dreireihigen Stützlagers mit drehendem Innenring als zweites Ausführungsbeispiel,

Figur 4     eine Veranschaulichung einer Laufbahnkrümmung in Umfangsrichtung mit einem ersten Krümmungsradius,

Figur 5     eine Veranschaulichung einer Laufbahnkrümmung in axialer Richtung mit gerundeten und zylindrischen Bereichen,

Figur 6     ein Innenring auf einem Bolzen eines dritten Ausführungsbeispiels in dreidimensionaler Ansicht,

Figur 7     eine zweidimensionale Ansicht des Innenrings mit Bolzen aus Figur 6,

Figur 8     ein viertes Ausführungsbeispiel mit Nadellagern im Längsschnitt, und

Figur 9     eine schematische, dreidimensionale Darstellung einer Bolzenaußenfläche mit Profilierung und Abflachung.

**Ausführliche Beschreibung der Zeichnungen**

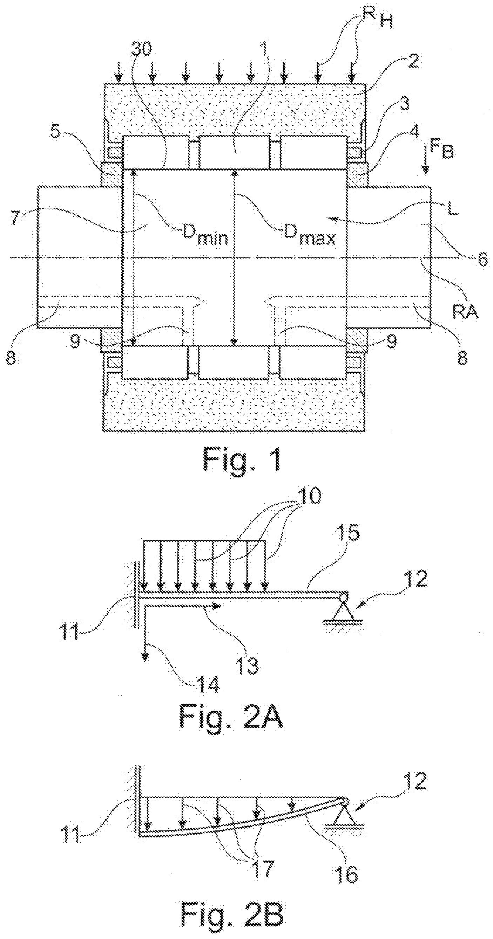

Figur 1 zeigt eine dreireihige Stützrolle mit als Zylinderrollen ausgeführten Wälzkörpern 1 im Längsschnitt entlang der Drehachse RA. Der profilierte Bolzenabschnitt 7 ist radial im Vergleich zum ebenfalls feststehenden Bolzen 6 vergrößert, um die drei Wälzkörperreihen bei einem größeren Teilkreisdurchmesser zu tragen. Die Profilierung ist auf der Außenfläche des Bolzenabschnittes 7 ausgeformt und ist axial variierend ausgebildet, wobei die Profilierung insgesamt eine konvexe Form aufweist, die im Bereich der mittleren Wälzkörperreihe den größten Durchmesser $D = D_{max}$ bildet und an den Rändern den kleinsten Durchmesser $D = D_{min}$ aufweist. In Umfangsrichtung ändert sich die Profilierung nicht.

Die Profilierung setzt sich in die Lastzone L fort: Gerade im Bereich der Lastzone L ist das Kantentragen aufgrund des Biegemomentes auch normalerweise am höchsten, sodass im Bereich der Wellenbiegung die axial variierende Profilierung besonders notwendig ist. Somit lässt sich die Wirkung des Biegemoments vorteilhaft kompensieren. Des Weiteren ist vorteilhaft, dass die Innenlaufbahn des Außenrings 2 keine Profilierung oder andere Laufbahnvariationen aufweisen muss, in der Formgestaltung also ebenfalls ein hoher Freiheitsgrad herrscht.

Der Bolzen 6 steht fest und enthält diverse Bohrungen 8,9, die zur Ölleitung an den Wälzkontakt vorgesehen sind. Die Sockelringe 4,5 sorgen für einen korrekten Sitz der Dichtungen 3 und verhindern das axiale Ablaufen der Wälzkörper 1 der äußeren Reihen.

Figur 2A zeigt schematisch zur Veranschaulichung den Idealfall einer axial gleichmäßig verteilten Stützkraft 10. Eine Abnutzung des Stützlagers würde hier gleichmäßig von statten gehen, womit eine lange Lebensdauer garantiert wäre.

Diese Situation läge bei einer rein senkrecht zur Drehachse RA und am Stützlager eingeleiteten Stützkraft vor, wobei auch die Biegelinie 15, die im Querschnitt entlang der Drehachse RA definiert ist, bei jeder Position x 13 eine Gerade bildet. Eine Profilierung wäre also nicht notwendig. Die Außenlaufbahn des Innenrings könnte zylindrisch ausgebildet werden.

Figur 2B zeigt eine schematische Veranschaulichung einer Biegelinie 16 bei wirkendem Biegemoment. Die Korrekturfunktion w(x) verursacht eine in Richtung des Haltepunktes 12 zunehmende Durchmesserfunktion $D(x) = D_0 - 2 \cdot w(x)$. Der zugehörige zweite Krümmungsradius $R_{K2}$ der Krümmung in Axialrichtung kann hierbei in Abhängigkeit von der Biegelinie Werte zwischen 5000 und 30000 Millimeter annehmen. Der Profilierungsradius ist halb so groß wie D(x) und ändert sich in Abhängigkeit von der axialen Position x in den gekrümmten Bereichen, in den zylindrischen Bereichen der Profilierung bleibt der Profilierungsradius konstant.

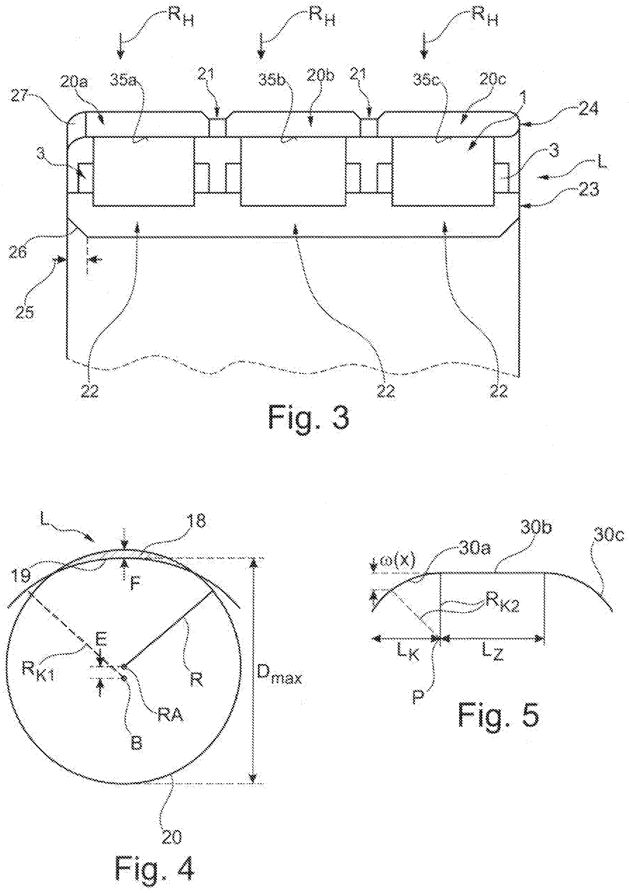

Figur 3 zeigt ein dreireihiges Stützlager mit drehendem Innenring 23. Die Zufuhr des Schmieröls wird durch die Öffnungen 21 bewerkstelligt, die zwischen den Außenringsegmenten 20a, 20b, beziehungsweise den Außenringsegmenten 20b, 20c angeordnet sind. Jede Wälzkörperreihe hat einen eigenen Käfig 3 und eine individuelle Profilierung 22 die dem Biegemoment der gesamten Stützlageranordnung (es ist nur das Stützlager abgebildet) Rechnung trägt. Zusätzlich sind die Innenlaufbahnen 35a, 35b, 35c ebenfalls profiliert.

Zum erleichterten Aufpressen weist das gezeigte Stützlager, insbesondere Stützrolle, einen konischen Bereich 26 am Innenring 23 auf.

Am Außenringabschnitt 20a ist eine Stirnnut 27 eingebracht, die zur Ausrichtung des Außenrings 20 verwendet werden kann.

Figur 4 zeigt eine Wälzkörperlaufbahn 20 eines Innenrings mit dem Radius R, ausgehend von der senkrecht zur Zeichenebene orientierten Drehachse RA, wobei es sich bei der Laufbahn 20 um eine feststehende Laufbahn 20 handelt.

Der weniger gekrümmte Bereich wird durch den ersten Krümmungsradius $R_{K1}$ definiert und beginnt beziehungsweise endet an den jeweiligen Schnittpunkten mit dem Laufbahnradius R, wobei der erste Krümmungsradius $R_{K1}$ am Bezugspunkt B abgetragen wird, der in Bezug zur Drehachse RA gegenüber zur maximalen Materialrücknahme F angeordnet ist. Der Abstand des Bezugspunktes B zur Drehachse RA ist die Exzentrizität E, die aus der Summe der Radiendifferenz und der maximalen Materialrücknahme F gebildet wird:

$$E = R_{K1} - R + F$$

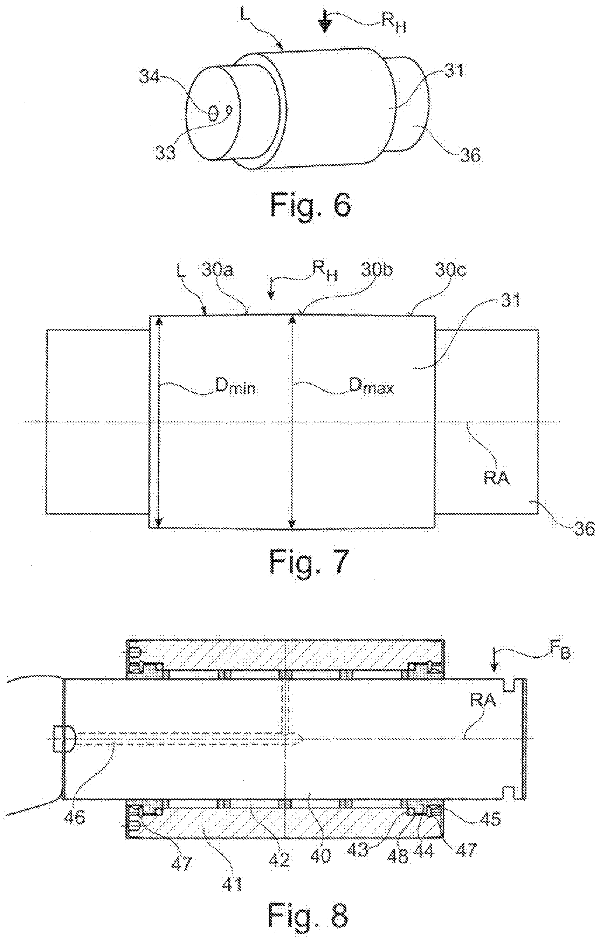

Im Hinblick auf Figur 1 kann es sich bei der in Figur 4 gezeigten Laufbahn 20 um die Außenlaufbahn des Bolzenabschnittes 7 der mittleren Wälzkörperreihe handeln oder alternativ um die Außenlaufbahn des Innenrings 31 der Figur 6. Die Profilierung ist aufgrund der senkrecht zur Drehachse RA orientierten Schnittfläche der Figur 4 nicht erkennbar.

Figur 5 zeigt eine Profilierung in axialer Richtung mit einem zylindrischen Bereich der Länge $L_Z$ und mit zwei sich lateral anschließenden, gekrümmten Bereichen der Länge $L_K$. Der zweite Krümmungsradius $R_{K2}$ wird auf den Punkt P bezogen und ist übertrieben dargestellt. Die Krümmungen erlauben eine Annäherung an die Biegelinie der äußeren beiden Laufbahnen 30a und 30c. Die mittlere Laufbahn 30b ist aufgrund ihrer Lage nicht kritisch und von daher zylindrisch ausgebildet. Von einer Krümmung in axialer Richtung kann abgesehen werden. Figuren 6 und 7 zeigen eine Ausführungsform eines Innenrings 31 mit Bolzen 36 in einem dritten Ausführungsbeispiel in dreidimensionaler, beziehungsweisezweidimensionaler Ansicht. Die Außenlaufbahnen 30a,b,c des Innenrings 31 sind in axialer Richtung profiliert und weisen zusätzlich in der Lastzone L, die durch die Hauptrichtung der Stützkraft $R_H$ definiert ist, jeweils eine Krümmung und eine Profilierung auf. Interessanterweise kann der Bolzen 36 aus einem weniger teurem Stahl gefertigt werden, wobei der aus Wälzlagerstahl hergestellte Innenring 31 auf dem Bolzen 36 aufgesetzt ist. Dabei ist die Außenform des Bolzens 36 im Bereich des Innenringsitzes an den Innenring 31 angepasst und wirkt axial positionierend. Diese Bolzen-Innenring Anordnung kann den einstückigen Bolzen 6 des Ausführungsbeispiels der Figur 1 kostengünstig ersetzen.

Im montierten Zustand haben die Wälzkörperreihen unterschiedliche Radialluftwerte. Dies bedeutet, dass die Wälzkörper in einem Niedriglast-Zustand zwischen den Ringen ohne Biegung ungleichmäßig belastet werden. Dies ist jedoch unproblematisch, weil sowohl das Kantentragen in der Stützlagerung, als auch die ungleichmäßige Belastung der Wälzkörperreihen in Bezug auf die Lebensdauer kaum Einfluss haben.

Figur 8 zeigt ein weiteres Ausführungsbeispiel im Längsschnitt entlang der Drehachse RA. Die gezeigte Stützlagerung basiert auf Nadeln als Wälzkörper 42, die auf der profilierten, feststehenden Achse 40 abrollen, die in ihrem Innern eine Schmierölversorgung 46 enthält. Die Wälzkörper 42 werden axial durch die Halteringe 48 gehalten, die zur Aufnahme einer Lippendichtung 45 vorgesehen sind und mit einem O-Ring 43 zusätzlich zum Außenring 41 hin abgedichtet sind. Des Weiteren weisen die Halteringe 48 eine radial innen gelegene Nut 44 auf.

Die gesamte Anordnung ist mit den beidseitig angebrachten Schnappringen 47 gesichert und kompensiert mittels einer Profilierung am Bolzen 40 die Biegung desselben. Optional können an den Innenlaufbahnen des Außenrings 41 noch Profilierungen vorgesehen werden.

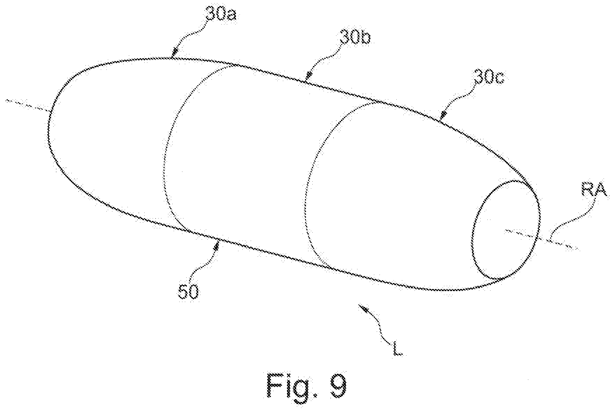

Figur 9 zeigt eine schematische Darstellung einer Bolzenaußenfläche, wie sie im Ausführungsbeispiel der Figuren 6 und 7 vorliegen könnte.

Die gezeigte Bolzenaußenfläche ist für drei Außenlaufbahnen 30a, b, c vorgesehen, nämlich zwei äußere Laufbahnen 30a, c und eine mittlere Laufbahn 30b. Die äußeren Laufbahnen 30a, c sind im profilierten Bereich des Bolzens angeordnet, wobei die Profilierung zur besseren Illustration schematisch dargestellt ist (mit einem übertrieben kleinen Profilierungsradius $R_{K2}$). Die mittlere Laufbahn 30b verläuft auf einem mittleren, zylindrischen Abschnitt des Bolzens. Alle Laufbahnen sind jedoch integral mit der Profilierung in Umfangsrichtung (Abflachung) 50 ausgebildet. Dies bedeutet, dass die axialen Profilierungen im Lastbereich zumindest teilweise in die Profilierung in Umfangsrichtung 50 übergehen, zumal diese nicht vollumfänglich sondern nur im Lastbereich ausgebildet ist.

Alle Krümmungsradien müssen genügend groß ausgelegt sein, so dass die Übergänge zwischen der Abflachung 50 und dem rein profilierten Bereich keine Schäden während des Wälzbetriebes verursachen.

Des Weiteren gilt es allgemein für alle Ausführungsbeispiele festzuhalten, dass sowohl der Innenring als auch der Außenring eine Ringform in Bezug auf die jeweilig ausgebildete Laufbahn aufweist. Der Innenring muss radial nach innen jedoch nicht notwendigerweise eine Ringform aufweisen, sondern kann massiv sein, jede andere erdenkliche Form ausbilden oder in ein anderes Bauteil teilweise oder ganz integriert sein, wobei das Bauteil selbst keine Ringform aufweisen muss. Entsprechendes gilt für die Ausgestaltung des Außenrings in radialer Richtung nach außen von dessen Innenlaufbahn weg.

**Bezugszeichenliste**

| | |
|---|---|
| B | Bezugspunkt |
| E | Exzentrizität |
| F | maximale Materialrücknahme |
| $F_B$ | zur Generierung des Biegemoments |
| L | Lastzone |
| R | Laufbahnradius |
| RA | Drehachse |
| $R_H$ | Hauptrichtung der Stützkraft |
| $R_{K1}$ | erster Krümmungsradius der Krümmung in Umfangsrichtung (Abflachung) |
| $R_{K2}$ | zweiter Krümmungsradius der Profilierung in axialer Richtung |
| 1 | Wälzkörper |
| 2 | Außenring |
| 3 | Wälzlagerkäfig |
| 4 | rechter Sockelring |
| 5 | linker Sockelring |
| 6 | Bolzen |
| 7 | profilierter Bolzenabschnitt |
| 8 | axiale Bohrung zur Schmiermittelleitung |

9  radiale Bohrung zur Schmiermittelleitung
10  Stützkraft
11  Begrenzung
12  Haltepunkt
13  axiale Position x
14  Kraftrichtung
15  Biegelinie
16  Biegelinie
17  radiale Korrekturfunktion w(x)
18  Materialrücknahme
19  Laufbahnbereich mit reduzierter Krümmung
20a  äußeres Ringsegment
20b  mittleres Ringsegment
20c  äußeres Ringsegment
21  Schmieröffnung
22  individuelle Profilierung
23  Innenring
24  Außenring
25  axiale Breite des konischen Bereichs
26  konischer Bereich
27  Stirnnut
30a  äußere Außenlaufbahn
30b  mittlere Außenlaufbahn
30c  äußere Außenlaufbahn
31  Innenring
33  Schmieröffnung
34  Öffnung
35a  profilierte Innenlaufbahn
35b  profilierte Innenlaufbahn
35c  profilierte Innenlaufbahn
40  Bolzen
41  Außenring
42  Nadel
43  O-Ring
44  Innennut
45  Lippendichtung
46  Schmierölversorgung
47  Schnappring
48  Haltering
50  Abflachung

**Patentansprüche**

1. Stützlagerung mit einem Außenring (2, 24, 41), mit einem Innenring (7, 23, 31, 40) und zwischen dem Außenring (2, 24, 41) und dem Innenring (7, 23, 31, 40) auf Laufbahnen (30, 35) abrollbaren Wälzkörpern (1), wobei durch eine Last mit fester Wirkrichtung ein Biegemoment zwischen den Ringen (2, 24, 41, 7, 23, 31, 40) anliegt, wobei eine Außenlaufbahn (30) des Innenrings (7, 31, 40) und/oder eine Innenlaufbahn (35) des Außenrings (24) eine Profilierung mit in axialer Richtung veränderlichem Durchmesser (D) aufweist, wobei die Profilierung an eine durch das Biegemoment verursachte Biegelinie (16) im Wälzkontakt angeglichen oder angenähert ist und die Biegelinie (16) eine Linie ist, auf der vom jeweiligen Ring (24, 7, 23, 31) auf die Wälzkörper (1) übertragenen und durch das Biegemoment verursachten Biegekräfte im Wesentlichen senkrecht stehen, **dadurch gekennzeichnet, dass** die Profilierung der Außenlaufbahn des Innenrings (7, 23, 31) zumindest in einem Bereich durch eine radiale Korrekturfunktion w(x) definiert ist und der Durchmesser D(x) des Innenrings (7, 23, 31) von w(x) und einem konstanten Durchmesser $D_0$ in der folgenden Weise abhängt:

$$D(x) = D_0 - 2*w(x);$$

$$w(x) = R_{K2} - (R_{K2}^2 - x^2)^{-0,5}$$

wobei x eine axiale Position am Innenring (7, 23, 31) ist, und ein zweiter Krümmungsradius ($R_{K2}$) in Abhängigkeit von Richtung und/oder Betrag des Biegemomentes und insbesondere auch der Stützlagereigenschaften, gewählt ist.

2. Stützlagerung nach Anspruch 1, wobei der Innenring (7, 31) in eine massive Achse, einen massiven Bolzen oder einen massiven Achszapfen integriert ist, wobei an der massiven Achse, beziehungsweise am massiven Achszapfen, die Profilierung der Außenlaufbahn (30) ausgebildet ist.

3. Stützlagerung, nach einem der Ansprüche 1 oder 2, wobei der Innenring (31) auf eine Achse, Bolzen (36) oder Achszapfen aufbringbar ist und gegen eine Verdrehung gesichert ist.

4. Stützlagerung nach einem der Ansprüche 1 bis 3, wobei der zweite Krümmungsradius ($R_{K2}$) zwischen 5000 bis 30000 Millimeter beträgt.

5. Stützlagerung nach einem der vorhergehenden Ansprüche, wobei die Wälzkörper (1) in zwei, drei oder vier Wälzkörperreihen angeordnet sind.

6. Stützlagerung nach einem der vorhergehenden Ansprüche, wobei eine Außenlaufbahn (30) des Innenrings (7, 23, 31) im Bereich einer Lastzone (L) in Umfangsrichtung eine geringere Krümmung aufweist als die jeweilige Laufbahn (30, 35) außerhalb der Lastzone (L).

7. Stützlagerung nach Anspruch 6, wobei mindestens vier oder fünf Wälzkörper (1) einer Wälzkörperreihe einen erhöhten Anteil einer Stützkraft (10) zwischen Außenring (2, 24, 41) und Innenring (7, 23, 31, 40) übertragen.

8. Stützlagerung nach Anspruch 6, wobei die geringere Krümmung in Umfangsrichtung durch einen ersten Krümmungsradius ($R_{k1}$) definiert ist, der um 0,2% bis 0,8 % des Laufbahndurchmessers (D) größer ist als der Laufbahnradius (R).

9. Laufrolle, insbesondere Kurvenrolle oder Stützrolle, mit einer Stützlagerung nach einem der vorhergehenden Ansprüche.

10. Richtmaschine mit einer Stützlagerung nach einem der Ansprüche 1 bis 8.

**Claims**

1. Supporting bearing having an outer ring (2, 24, 41), having an inner ring (7, 23, 31, 40) and rolling bodies (1) which roll between the outer ring (2, 24, 41) and the inner ring (7, 23, 31, 40) on raceways (30, 35), a bending moment prevailing between the rings (2, 24, 41, 7, 23, 31, 40) as a result of a load with a fixed effective direction, an outer raceway (30) of the inner ring (7, 31, 40) and/or an inner raceway (35) of the outer ring (24) having a profile with a variable diameter (D) in the axial direction, the profile being adjusted or approximated to a bending line (16) in rolling contact, which bending line (16) is caused by way of the bending moment and is a line, on which bending forces which are transmitted from the respective ring (24, 7, 23, 31) to the rolling bodies (1) and are caused by way of the bending moment lie substantially perpendicularly, **characterized in that** the profile of the outer raceway of the inner ring (7, 23, 31) is defined at least in one region by way of a radial correction function w(x), and the diameter D(x) of the inner ring (7, 23, 31) is dependent on w(x) and a constant diameter $D_0$ in the following way:

$$D(x) = D_0 - 2*w(x);$$

$$w(x) = R_{K2} - (R_{K2}^2 - x^2)^{-0.5},$$

x being an axial position on the inner ring (7, 23, 31), and a second curvature radius ($R_{K2}$) being selected in a manner which is dependent on the direction and/or magnitude of the bending moment and, in particular, also on the supporting bearing properties.

2. Supporting bearing according to Claim 1, the inner ring (7, 31) being integrated into a solid axle, a solid pin or a solid axle journal, the profile of the outer raceway (30) being configured on the solid axle, or on the solid axle journal.

3. Supporting bearing according to either of Claims 1 and 2, it being possible for the inner ring (31) to be applied to an axle, pin (36) or axle journal, and the said inner ring (31) being secured against rotation.

4. Supporting bearing according to one of Claims 1 to 3, the second curvature radius ($R_{K2}$) being between 5000 to 30000 millimetres.

5. Supporting bearing according to one of the preceding claims, the rolling bodies (1) being arranged in two, three or four rolling body rows.

6. Supporting bearing according to one of the preceding claims, an outer raceway (30) of the inner ring (7, 23, 31) having a smaller curvature in the circumferential direction in the region of a load-bearing zone (L) than the respective raceway (30, 35) outside the load-bearing zone (L).

7. Supporting bearing according to Claim 6, at least four or five rolling bodies (1) of a rolling body row transmitting an increased proportion of a supporting force (10) between the outer ring (2, 24, 41) and the inner ring (7, 23, 31, 40).

8. Supporting bearing according to Claim 6, the smaller curvature in the circumferential direction being defined by way of a first curvature radius ($R_{k1}$) which is greater by from 0.2% to 0.8% of the raceway diameter (D) than the raceway radius (R).

9. Running roller, in particular cam roller or supporting roller, having a supporting bearing according to one of the preceding claims.

10. Straightening machine having a supporting bearing according to one of Claims 1 to 8.

**Revendications**

1. Palier de soutien présentant une bague extérieure (2, 24, 41), une bague intérieure (7, 23, 31, 40) et des corps de roulement (1) qui peuvent rouler sur des pistes de roulement (30, 35) entre la bague extérieure (2, 24, 41) et la bague intérieure (7, 23, 31, 40), un couple de flexion étant appliqué entre les bagues (2, 24, 41, 7, 23, 31, 40) par une charge appliquée dans une direction d'action fixe, une piste extérieure de roulement (30) de la bague intérieure (7, 31, 40) et/ou une piste intérieure de roulement (35) de la bague extérieure (24) présentant un profil dont le diamètre (D) varie dans la direction axiale, le profil étant compensé ou approché au contact du roulement sur une ligne de flexion (16) provoquée par le couple de flexion, la ligne de flexion (16) étant une ligne transférée sur les corps de roulement (1) par la bague (24, 7, 23, 31) respective et les forces de flexion résultant du couple de flexion étant essentiellement perpendiculaires, **caractérisé en ce que** le profil de la piste extérieure de roulement de la bague intérieure (7, 23, 31) est défini au moins dans une partie par une fonction radiale de correction w(x), et le diamètre D(x) de la bague intérieure (7, 23, 31) dépend de w(x) et d'un diamètre constant $D_0$ de la façon suivante :

$$D(x) = D_0 - 2 * w(x);$$

$$w(x) = R_{K2} - (R_{K2}^2 - x^2)^{-0,5}$$

où x est une position axiale sur la bague intérieure (7, 23, 31), et un deuxième rayon de courbure ($R_{K2}$) est sélectionné en fonction de la direction et/ou du niveau du couple de flexion et en particulier aussi des propriétés du palier de soutien.

2. Palier de soutien selon la revendication 1, dans lequel la bague intérieure (7, 31) est intégrée dans un axe massif, un goujon massif ou un tourillon d'axe massif, le profil de la piste extérieure de roulement (30) étant formé sur l'axe massif ou sur le tourillon d'axe massif.

3. Palier de soutien selon l'une des revendications 1 ou 2, dans lequel la bague intérieure (31) peut être placée sur un axe, un goujon (36) ou un tourillon d'axe et est empêchée de se tordre.

4. Palier de soutien selon l'une des revendications 1 à 3, dans lequel le deuxième rayon de courbure ($R_{K2}$) est compris entre 5 000 et 30 000 millimètres.

5. Palier de soutien selon l'une des revendications précédentes, dans lequel le palier de roulement (1) est disposé en deux, trois ou quatre rangées de corps de roulement.

6. Palier de soutien selon l'une des revendications précédentes, dans lequel une piste extérieure de roulement (30) de la bague intérieure (7, 23, 31) présente dans la région d'une zone de charge (L) une moindre courbure dans la direction périphérique que la piste de roulement (30, 35) située à l'extérieur de la zone de charge (L).

7. Palier de soutien selon la revendication 6, dans lequel au moins quatre ou cinq corps de roulement (1) d'une série de corps de roulement transfèrent une plus grande partie d'une force de soutien (10) entre la bague extérieure (2, 24, 41) et la bague intérieure (7, 23, 31, 40).

8. Palier de soutien selon la revendication 6, dans lequel la moindre courbure dans la direction périphérique est définie par un premier rayon de courbure ($R_{k1}$) plus grand que le rayon (R) de la piste de roulement de 0,2 % à 0,8 % du diamètre (D) de la piste de roulement.

9. Rouleau, en particulier rouleau courbe ou rouleau de soutien, présentant un palier de soutien selon l'une des revendications précédentes.

10. Machine d'alignement dotée d'un palier de soutien selon l'une des revendications 1 à 8.

Fig. 1

Fig. 2A

Fig. 2B

Fig. 3

Fig. 4

Fig. 5

Fig. 6

Fig. 7

Fig. 8

Fig. 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010036248 A1
- JP 2002143928 A
- US 6616338 B2